# EUROPÄISCHE PATENTANMELDUNG

(11) **EP 2 395 455 A1**
(43) Veröffentlichungstag der Anmeldung: **14.12.2011**
(21) Anmeldenummer: 10165535.5
(22) Anmeldetag: 10.06.2010
(51) Int. Cl.: G06K 9/62

(54) **Verfahren und System zum Testen biometrischer Erkennungssysteme**

(71) Anmelder: Deutsche Telekom AG, 53113 Bonn (DE)
(72) Erfinder: Trinkel, Marian, 52372, Kreuzau OT Untermaubach (DE)

(57) **Zusammenfassung**

Die Erfindung betrifft ein Verfahren und ein System zum Testen biometrischer Erkennungssysteme (1), mittels denen ein erfasstes Urbild von Körpermerkmalen einer Person zu Daten der Person zugeordnet werden kann, wobei für den Test dem Erkennungssystem (1) eine Vielzahl von Urbildern zugeführt wird, deren zugeordnete Person bekannt ist und überprüft wird, ob das Erkennungssystem die zugeordnete Person zutreffend auffindet, bei dem eine vorbestimmte / vorbestimmbare Anzahl von realen Urbildern (2) realer existierender Personen (RP1, RP2, RP3,...) erfasst wird und zu wenigstens einen Teil der realen Urbilder (2), insbesondere zu allen realen Urbildern (2) durch Veränderung der realen Urbilder (2) zusätzliche virtuelle Urbilder (2a) generiert werden, die von einem realen Urbild (2) abweichen, und jedem virtuellen Urbild (2a) eine virtuelle nicht existierende Person (VP1, VP2,...) zugeordnet wird und für den Test dem Erkennungssystem (1) die virtuellen Urbilder (2a), insbesondere auch die realen Urbilder (2) oder daraus berechnete Bilder (2b) zur Überprüfung zugeführt werden und überprüft wird, ob das Erkennungssystem (1) die zugeordnete Person (RP1, RP2,....VP1, VP2,...) zutreffend auffindet.

## Beschreibung

Die Erfindung betrifft ein Verfahren zum Testen biometrischer Erkennungssysteme, mittels denen ein erfasstes Urbild von Körpermerkmalen einer Person zu Daten der Person zugeordnet werden kann und wobei für den Test dem Erkennungssystem eine Vielzahl von Urbildern zugeführt wird, deren zugeordnete Personen bekannt ist und überprüft wird, ob das Erkennungssystem die zugeordnete Person zutreffend auffindet.

Die Erfindung betrifft weiterhin ein System zum Testen biometrischer Erkennungssysteme, mittels denen ein erfasstes Urbild von Körpermerkmalen einer Person zu Daten der Person zugeordnet werden kann, umfassend eine Datenbank, aus der für den Test dem Erkennungssystem eine Vielzahl von Urbildern zuführbar ist, deren zugeordnete Personen bekannt ist und überprüfbar ist, ob das Erkennungssystem zugeordnete Personen zutreffend auffindet.

Biometrische Erkennungssysteme sind im Stand der Technik bekannt und werden üblicherweise dafür eingesetzt, eine Person anhand von biometrischen Körpermerkmalen zu identifizieren.

Dabei ist es für ein biometrisches Erkennungssystem wesentlich, bestimmte Körpermerkmale einer zu identifizierenden Person zunächst in einem als Urbild bezeichneten Datensatz zu erfassen. Ein solches Urbild kann beispielsweise bei einem Fingerabdruckscanner als beispielhaftes Erkennungssystem den Fingerabdruck insbesondere bildlich repräsentieren.

Ein solches Urbild wird bei einem Fingerabdruckscanner üblicherweise optisch oder auch durch andere Erfassungsmaßnahmen von einer Fingerkuppe einer zu identifizierenden Person abgetastet. Bei andersartigen Erkennungssystemen können dementsprechend auch andersartige Urbilder vorgesehen sein.

Beispielsweise kann ein Erkennungssystem zur Identifizierung einer Person anhand der Augeniris als Urbild die Iris des Auges der Person erfassen, beispielsweise fotografisch oder videografisch.

Biometrische Gesichtserkennungssysteme können demgegenüber das gesamte Gesicht in einem Urbild erfassen.

Auf Spracherkennung basierende biometrische Erkennungssysteme erfassen hingegen kein Bild im eigentlichen Sinn, sondern es wird vielmehr hier unter dem Begriff des Urbildes die Repräsentation einer Sprachprobe verstanden, beispielsweise ein Sonogramm.

Alle solchen biometrischen Erkennungssysteme basieren weiterhin darauf, dass aus einem erfassten Urbild von Körpermerkmalen einer Person biometrische Daten berechnet werden, die oftmals auch als biometrische PIN (Personen-IdentifikationsNummer) bezeichnet werden.

Zum Zweck einer zukünftigen Erkennung einer Person ist es daher erforderlich, in einem ersten Schritt ein Urbild von Körpermerkmalen der Person aufzunehmen, hieraus die biometrischen Daten berechnen zu lassen und zu diesen berechneten biometrischen Daten bzw. der biometrischen PIN die Person identifizierende Angaben zu speichern, wie beispielsweise Name, Adresse, Geburtsdatum, Kontoverbindung etc.

Es kann sodann zukünftig nach einer Erfassung eines Urbildes von Körpermerkmalen dieser selben Person durch Berechnung der biometrischen Daten und Überprüfung der biometrischen Daten hinsichtlich ihres Vorhandenseins in einer Datenbank ein Zugriff erfolgen auf Identifikationsdaten der so bestimmten Person.

Beispielhafte Anwendung eines solchen biometrischen Erkennungssystems ergibt sich bei Bezahlvorgängen an Supermarktkassen sowie auch bei Zutrittskontrollsystemen.

Im Stand der Technik ist es dabei bekannt, dass die Erkennungs-Zuverlässigkeit solcher biometrischer Erkennungssysteme zweifelhaft ist. Oftmals wird von den Herstellern biometrischer Erkennungssysteme dieser Art eine hohe Zuverlässigkeit im Bereich von über 90%, teilweise sogar 98% versprochen, wohingegen keine gesicherte Möglichkeit besteht, die Zuverlässigkeit objektiv zu testen.

Im Stand der Technik wurde zum Test solcher biometrischer Erkennungssysteme bislang derart vorgegangen, dass von einer bestimmten Anzahl von Personen durch das Erkennungssystem Urbilder von Körpermerkmalen erfasst wurden und sodann die erfassten Urbilder vielfach kopiert wurden. Es ergibt sich dadurch ein Testdatensatz einer enormen Menge von Urbildern, die sich jedoch nicht tatsächlich unterscheiden, da dieser Testdatensatz zu einem erheblichen Anteil lediglich aus Kopien besteht.

Eine sichere Überprüfung der Zuverlässigkeit eines biometrischen Erkennungssystems führt mit einem solchen Datensatz von kopierten Urbildern jedoch nicht zu einer sicheren Statistik und somit nicht zu einer ausreichend genauen Aussage über die Güte des Systems.

Es ist daher die Aufgabe der Erfindung, ein Verfahren und ein System zum Testen biometrischer Erkennungssysteme bereitzustellen, mit denen eine genauere Aussage über die Zuverlässigkeit, d.h. hier insbesondere die Erkennungsrate biometrischer Erkennungssysteme erzielt werden kann.

Diese Aufgabe wird erfindungsgemäß dadurch gelöst, dass nach einem Aspekt des erfinderischen Verfahrens eine vorbestimmte/vorbestimmbare Anzahl von realen Urbildern realer existierender Person erfasst wird und zu wenigstens einem Teil der realen Urbilder, insbesondere zu allen realen Urbildern, durch Veränderung der realen Urbilder zusätzliche virtuelle Urbilder generiert werden, die von einem realen Urbild abweichen, wobei weiterhin jedem virtuellen Urbild eine virtuelle, nicht existierende Person zugeordnet wird und für den Test dem Erkennungssystem die virtuellen Urbilder, insbesondere auch die realen Urbilder, oder daraus berechnete Bilder zur Überprüfung zugeführt werden und überprüft wird, ob das Erkennungssystem zugeordnete Personen zutreffend auffindet.

In gleicher Weise wird die Aufgabe gelöst durch ein System zum Testen biometrischer Erkennungssysteme, welches eine Bildverarbeitungsanlage umfasst, die eingerichtet ist zu wenigstens einem Teil einer vorbestimmten/vorbestimmbaren Anzahl von realen Urbildern realer existierender Personen, insbesondere zu allen realen Urbildern durch Veränderung der realen Urbilder zusätzliche virtuelle Urbilder zu generieren, die von einem realen Urbild abweichen und jedem virtuellen Urbild eine virtuelle, nicht existierende Person zuzuordnen und für den Test im Erkennungssystem die virtuellen Urbilder, insbesondere auch der realen Urbilder oder daraus berechnete Bilder zur Überprüfung zuzuführen und zu überprüfen, ob das Erkennungssystem die zugeordnete Person zutreffend auffindet.

Der wesentliche Kerngedanke der Erfindung beruht darauf, eine genügende Anzahl von Urbildern für einen Test bereit zu stellen, die zueinander nicht identisch sind, wie dies im Stand der Technik in einer großen Anzahl der Fall war. Wesentlich ist es dabei für die Erfindung, dass aus realen Urbildern tatsächlicher Personen neue zusätzliche virtuelle Urbilder generiert werden, die demnach nicht von einer real existierenden Person stammen, sondern lediglich durch Berechnung generiert wurden.

Soweit gemäß der Erfindung ausgesagt wird, dass virtuelle Urbilder durch Änderung realer Urbilder generiert werden, soll dies nicht bedeuten, dass hierdurch das reale Urbild aufgrund der Veränderung verloren geht. Vielmehr kann dies erfindungsgemäß bedeuten, dass zusätzlich zu einem realen Urbild wenigstens ein virtuelles weiteres Urbild generiert wird unter Beibehaltung des ursprünglichen realen Urbildes. Das ursprüngliche reale Urbild bildet demnach lediglich eine Berechnungsgrundlage zur Generierung wenigstens eines weiteren zusätzlichen virtuellen Urbildes.

Da erfindungsgemäß virtuelle Urbilder nicht von tatsächlichen, real existierenden Personen stammen können, ist es demnach weiterhin vorgesehen, eine Zuordnung eines virtuellen Urbildes zu einer ebenso virtuellen, nicht existierenden Person vorzunehmen. Beispielsweise können einem solchen virtuellen Urbild beliebige Personendaten zugeordnet werden, d.h. beliebige Namen, Adressen, Geburtsdaten etc. In einfachster Ausführung der Erfindung kann es auch vorgesehen sein, einem virtuellen Urbild einen beliebig einfachen Personenidentifikator zuzuordnen, wie schlichtweg die Aussage "Person 1" oder ähnliches.

Der erfindungsgemäße Vorteil ist weiterhin darin zu sehen, dass durch die Generierung virtueller Urbilder zum Testen des Erkennungssystems solche Bilder geschaffen werden, die realitätsnah sind, was vorliegend bedeuten soll, dass es solche virtuellen Urbilder von Personen tatsächlich geben könnte. In einer bevorzugten Ausführungsform der Erfindung sollen demnach virtuelle, d.h. generierte Urbilder, solche Bildmerkmale aufweisen, die tatsächlich in biometrischen Merkmalen von Menschen vorkommen können.

Gemäß einem weiteren Aspekt der Erfindung kann es sodann vorgesehen sein, dass zu jedem Urbild, unabhängig davon, ob es sich um ein reales oder um ein virtuelles handelt, durch das Erfassungssystem biometrische Identifikationsdaten berechnet werden, somit also solche Daten, die häufig auch als biometrische PIN bezeichnet werden. Diese so generierten, d.h. vom Erfassungssystem berechneten biometrischen Identifikationsdaten können sodann zusammen mit Personendaten in einer Datenbank vor dem Test gespeichert werden.

Der Test, bei welchem sodann ein Urbild reeller oder virtueller Art dem Erfassungssystem zugeführt werden soll und bei welchem bekannt ist, zu welcher Person das verwendete Urbild zugeordnet ist, kann sodann aufgrund der Berechnung biometrischen Daten (PIN) und somit der Tatsache, dass das Erfassungssystem diesem Urbild eine Person zuordnet, festgestellt werden, ob die durch das Erfassungssystem vorgenommene Personenzuordnung der tatsächlich zugeordneten Person entspricht und somit das Erfassungssystem korrekt gearbeitet hat.

Dabei kann es zum Testen des Erfassungssystems auch vorgesehen sein, dass aus einem realen oder virtuellen Urbild zunächst ein davon abweichendes Bild, z.B. ein Testbild generiert wird, wodurch z.B. simuliert werden kann, dass bei ein- und derselben Person im späteren realen Einsatz das Erfassungssystem, z.B. ein Fingerabdruckscanner, mit jeder einzelnen Erfassung immer ein leicht anderes Urbild erfasst.

Dies kann z.B. daran liegen, dass eine Person mit unterschiedlichen Geschwindigkeiten den Finger über die Erfassungsfläche führt, unterschiedliche Drücke beim Auflegen des Fingers ausübt, die Erfassungsfläche verschmutzt ist, die Fingerkuppe eventuell verunreinigt oder verschwitzt ist etc. Hier gibt es eine Vielzahl von Möglichkeiten, warum trotz identischer Person und immer gleichem erfassten Finger die von dem Erfassungssystem erfassten Urbilder voneinander abweichen. Die Problematik trifft auch auf andere Erfassungssystem als Fingerabdruckscanner zu.

In allen Fällen soll jedoch, da es sich um immer dieselbe Person handelt, das biometrische Erfassungssystem auch exakt immer dieselbe Person identifizieren.

Es kann so nach dem erfindungsgemäßen Verfahrensschritt eine solche, immer vorkommende Abweichung bei der Erfassung des Urbildes im späteren realen Einsatz simuliert werden.

Beispielsweise kann diese Simulation, d.h. die Generierung eines vom realen oder virtuellen Urbild abweichenden Testbildes dadurch erfolgen, dass die Bildqualität künstlich beeinflusst wird oder beispielsweise Bildbestandteile geändert, z.B. entfernt werden aus dem Urbild, um ein Testbild zu generieren.

Um aus der ursprünglich aufgenommenen vorbestimmten bzw. zumindest vorbestimmbaren Anzahl von realen Urbildern realer existierender Personen einen größeren Datensatz mit zusätzlichen virtuellen Urbildern zu erzeugen, kann es in einer Ausführung beispielsweise vorgesehen sein, dass wenigstens ein virtuelles Urbild erzeugt wird durch Überlagerung eines realen Urbildes mit einem Rauschen.

Ein solches Bildrauschen kann sich beispielsweise auch zeitlich ändern, z.B. kann es sich um ein statistisches Rauschen handeln. Hier besteht die Möglichkeit, ein Rauschbild zu generieren und dieses mit einem realen Urbild durch eine mathematische Verknüpfungsoperation zu verknüpfen, um so ein virtuelles Urbild zu generieren.

In einer anderen alternativen Ausführungsform kann es auch vorgesehen sein, wenigstens ein virtuelles Urbild zu erzeugen durch Veränderung eines realen Urbildes in Abhängigkeit eines anderen realen Urbildes. Eine solche Veränderung kann beispielsweise durch das sogenannte "Morphing" erfolgen. Hierbei wird unter "Morphing" verstanden, dass in einem Anwendungsfall, z.B. ausgehend von zwei realen Urbildern, künstlich Zwischenbilder berechnet werden, die das eine reale Urbild in das andere reale Urbild stufenweise überführen. Es kann bei diesem Prinzip des sogenannten "Morphing" zwischen zwei realen Urbildern eine grundsätzlich beliebige Anzahl von Zwischenbildern berechnet werden, die erfindungsgemäßen virtuellen Urbilder darstellen können.

In einer anderen Alternative kann es auch vorgesehen sein, dass ein virtuelles Urbild erzeugt wird durch Zerlegen wenigstens eines realen Urbilds in mehrere Bildbestandteile und Zusammenfügen der Bildbestandteile in einer anderen, neuen Anordnung zu einem virtuellen Urbild.

Es besteht so beispielsweise die Möglichkeit, aus einem einzigen realen Urbild durch Zerlegung des Bildes in n Bildbestandteile eine Anzahl von n! (n-Fakultät) virtuellen Bildern erzeugt werden. Dabei besteht erfindungsgemäß nicht nur die Möglichkeit, ein virtuelles Urbild durch Neuanordnung der mehreren Bildbestandteile nur eines einzigen Urbildes zu generieren, sondern es können hier auch die Bildbestandteile verschiedener anderer realer Urbilder verwendet werden.

In einer anderen erfindungsgemäßen Ausführung kann es auch vorgesehen sein, ein reales Urbild, z.B. durch Verzerrungen, Kontraständerungen, Verdickungen oder Verdünnungen von Linien oder sonstiger Bildbestandteile zu ändern ebenso wie durch das Ausschneiden oder das Hinzufügen von Bildbestandteilen, beispielsweise auch aus anderen realen Urbildern.

Grundsätzlich ist es demnach für das erfindungsgemäße Verfahren irrelevant, auf welche mathematische oder bildverarbeitende Art und Weise die Generierung eines virtuellen Urbildes aus wenigstens einem realen Urbild erfolgt. Wesentlich ist hierbei, dass das virtuelle Urbild mit dem wenigstens einem vorherigen realen Urbild nicht übereinstimmend ist und besonders bevorzugt, dass das virtuelle Urbild Bildmerkmale aufweist, die auch tatsächlich real bei Menschen als Körpermerkmale auftreten können. So kann sich ein virtuelles Urbild aus einem realen Urbild z.B. durch Änderungen bei den Minutien beim Fingerabdruck, der Nasenbreite oder dem Augenabstand bei einem Gesicht etc. ergeben.

Ein Ausführungsbeispiel der Erfindung ist in der nachfolgenden Figur beschrieben.

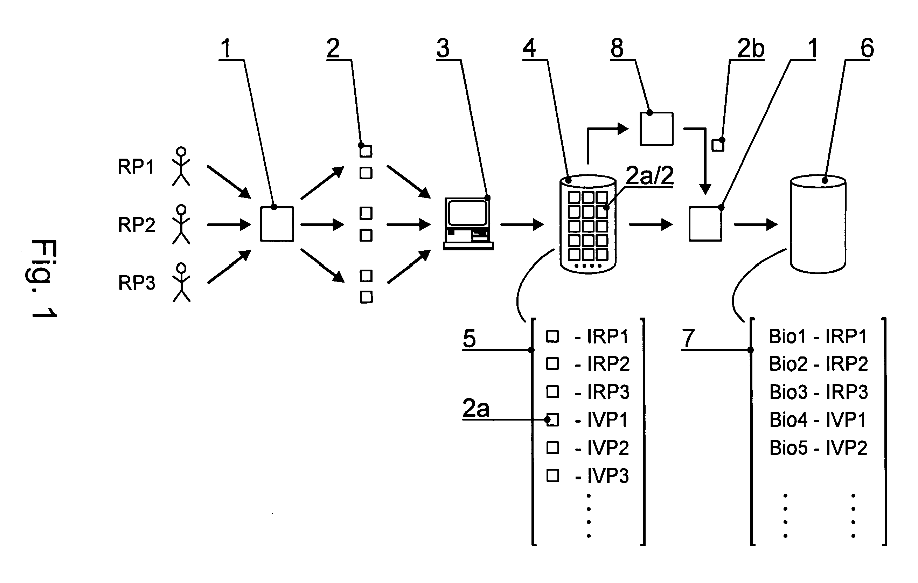

Die Figur 1 zeigt in schematischer Darstellung das unter Verwendung eines biometrischen Erfassungssystems 1 zunächst von beispielhaft drei real existierenden Personen, nämlich hier den Personen RP1, RP2 und RP3 jeweils reale Urbilder 2 erfasst werden.

Beispielsweise kann es sich bei dem biometrischen Erfassungssystem 1 um einen Fingerabdruckleser handeln, wobei in dieser Ausführung als nicht beschränkendes Beispiel von jeder realen Person zwei reale Urbilder 2 erfasst werden.

Es ergibt sich somit ein realer Urbilddatensatz von insgesamt sechs Urbildern 2 in dieser beispielhaften Anwendung. Diese sechs realen Urbilder 2 werden einer Bildverarbeitungsanlage 3 zugeführt, beispielsweise einem Computer, der unter Anwendung eines Bildverarbeitungsalgorithmus beliebiger Art, wie er beispielsweise im allgemeinen Teil zuvor beschrieben wurde, einen Datensatz 5 mit einer Vielzahl von virtuellen Urbildern 2a berechnet, die zusammen mit den realen Urbildern 2 in einer Datenbank 4 gespeichert werden.

Hierbei kann es sodann weiterhin vorgesehen sein, dass zu jedem der Urbilder, unabhängig davon, ob es sich um ein reales oder ein virtuelles handelt, eine Personenidentifikation gespeichert wird, nämlich zu realen Personen die Personenidentifikation IRP1, IRP2 bzw. IRP3, somit also Daten, die die zuvor genannten realen Personen RP1, RP2, RP3, etc identifizieren sowie weiterhin Daten IVP1, IVP2 etc., welche nicht existierende virtuelle Personen VP1, VP2, etc. identifizieren. Somit ist sichergestellt, dass erfindungsgemäß jedem der Urbilder, unabhängig davon, ob es sich um ein reales oder um ein virtuelles erzeugtes Urbild handelt, einer Person zugeordnet ist, um einen späteren Test vorzunehmen.

In einem ersten Schritt ist es sodann weiterhin vorgesehen, mit demselben Erfassungssystem 1 aus den Urbildern biometrische Daten B101, B102, B103 etc. zu bilden und diese in gleicher Weise den Personendaten IRP bzw. IVP zuzuordnen, wie es bei den zugehörigen Urbildern 2, 2a der Fall war.

Es ergibt sich hierdurch ein Zuordnungsdatensatz 7, der in einer weiteren Datenbank 6 oder gegebenenfalls auch in derselben vorherigen genannten Datenbank 4 gespeichert werden kann.

Mit den so zur Verfügung gestellten gesamten Daten kann daher nachfolgend ein Test durchgeführt werden.

Es besteht hier die Möglichkeit, aus der Datenbank 4 einen Test mit der grundsätzlich beliebigen Anzahl der Urbilder 2,2a reeller und virtueller Art durchzuführen, indem nämlich ein solches Urbild 2, 2a, zu welchem bekannt ist, zu welcher Person es zugeordnet ist, dem Erfassungssystem 1 zugeführt wird, um sodann wiederum mit dem Erfassungssystem 1 die biometrischen Daten BIO1, BIO2, ....BIOn...aus dem Urbild generieren zu lassen und um sodann weiterhin zu überprüfen, ob die generierten biometrischen Daten in den Daten 7 der Datenbank 6 vorhanden sind und, sofern eine Übereinstimmung gefunden wird, die entsprechenden Personendaten auszulesen. Es kann sodann geprüft werden, ob die ausgelesenen Personendaten zu derjenigen Person gehören, zu der auch das Urbild gehört, mit welcher der Test durchgeführt wurde.

Ein solcher Test kann, da die Urbilder nun nicht jeweils separat von Personen erfasst werden müssen, sehr schnell lediglich durch das Auslesen der Urbilder aus der Datenbank 4 erfolgen.

Hierbei kann es, so wie es die Figur 1 in einer Ausführungsvariante darstellt, es auch vorgesehen sein, die aus der Datenbank 4 ausgelesenen Urbilder realer oder virtueller Art mittels einer Bildänderungsvorrichtung 8, beispielsweise einer Datenverarbeitungsanlage mit einem entsprechenden Algorithmus, vor der Zuführung zu dem Erfassungssystem 1 zu Testbildern 2b zu ändern, beispielsweise um zu simulieren, dass üblicherweise bei der späteren Erfassung von Urbildern im realen Einsatz von mal zu mal leichte Abwandlungen im Urbild entstehen, selbst wenn dieses immer von derselben Person erfasst wird.

So kann eine solche Änderung durch die Vorrichtung 8 z.B. durch das Weglassen von Bildbestandteilen, Kontraständerungen, Simulation von Verschmutzungen z.B. durch künstliche Artefakte, die hinzugefügt werden, erzeugt werden.

Es zeigt sich gegenüber dem Stand der Technik, dass mit dem erfindungsgemäßen Verfahren bzw. System eine deutlich zuverlässige Überprüfung der Erkennungsgenauigkeit eines Erfassungssystems erzielt werden kann, da nämlich nunmehr nach dem erfindungsgemäßen Verfahren nicht lediglich mit einer hohen Anzahl von Bildern gearbeitet wird, die durch Kopien auseinander hervorgehen, sondern tatsächlich mit einer sehr hohen Anzahl von Urbildern, von denen keines einem anderen gleicht.

## Patentansprüche

1. Verfahren zum Testen biometrischer Erkennungssysteme (1), mittels denen ein erfasstes Urbild von Körpermerkmalen einer Person zu Daten der Person zugeordnet werden kann, wobei für den Test dem Erkennungssystem (1) eine Vielzahl von Urbildern zugeführt wird, deren zugeordnete Person bekannt ist und überprüft wird, ob das Erkennungssystem die zugeordnete Person zutreffend auffindet, **dadurch gekennzeichnet, dass** eine vorbestimmte / vorbestimmbare Anzahl von realen Urbildern (2) realer existierender Personen (RP1, RP2, RP3,...) erfasst wird und zu wenigstens einen Teil der realen Urbilder (2), insbesondere zu allen realen Urbildern (2) durch Veränderung der realen Urbilder (2) zusätzliche virtuelle Urbilder (2a) generiert werden, die von einem realen Urbild (2) abweichen, und jedem virtuellen Urbild (2a) eine virtuelle nicht existierende Person (VP1, VP2,...) zugeordnet wird und für den Test dem Erkennungssystem (1) die virtuellen Urbilder (2a), insbesondere auch die realen Urbilder (2) oder daraus berechnete Bilder (2b) zur Überprüfung zugeführt werden und überprüft wird, ob das Erkennungssystem (1) die zugeordnete Person (RP1, RP2,....VP1, VP2,...) zutreffend auffindet.

2. Verfahren nach Anspruch 1, **dadurch gekennzeichnet, dass** wenigstens ein virtuelles Urbild (2a) erzeugt wird durch Überlagerung eines realen Urbildes (2) mit einem Rauschen, insbesondere einem sich zeitlich ändernden, insbesondere statistischem Rauschen.

3. Verfahren nach Anspruch 1, **dadurch gekennzeichnet, dass** wenigstens ein virtuelles Urbild (2a) erzeugt wird durch Veränderung eines realen Urbildes (2) in Abhängigkeit eines anderen realen Urbildes (2), insbesondere durch Morphing.

4. Verfahren nach Anspruch 1, **dadurch gekennzeichnet, dass** wenigstens ein virtuelles Urbild (2a) erzeugt wird durch Zerlegen wenigstens eines realen Urbildes (2) in mehrere Bildbestandteile und Zusammenfügen der Bestandteile in einer neuen Anordnung zu einem virtuellen Urbild (2a).

5. Verfahren nach einen der vorherigen Ansprüche, **dadurch gekennzeichnet, dass** zu jedem Urbild (2, 2a) durch das Erfassungssystem (1) biometrische Identifikationsdaten berechnet werden, die zusammen mit Personendaten in einer Datenbank (6) vor dem Test gespeichert werden.

6. Verfahren nach einen der vorherigen Ansprüche, **dadurch gekennzeichnet, dass** zum Testen aus einem realen oder virtuellen Urbild (2, 2a) ein Testbild (2b) generiert wird, insbesondere durch Änderung der Bildqualität oder Bildbestandteile.

7. System zum Testen biometrischer Erkennungssysteme (1), mittels denen ein erfasstes Urbild von Körpermerkmalen einer Person zu Daten der Person zugeordnet werden kann, umfassend eine Datenbank, aus der für den Test dem Erkennungssystem (1) eine Vielzahl von Urbildern zugeführt wird, deren zugeordnete Person bekannt ist und überprüft wird, ob das Erkennungssystem (1) die zugeordnete Person zutreffend auffindet, **dadurch gekennzeichnet, dass** sie eine Bildverarbeitungsanlage (3) umfasst, die eingerichtet ist, zu wenigstens einem Teil einer vorbestimmten / vorbestimmbaren Anzahl von realen Urbildern (2) realer existierender Personen (RP1, RP2, RP3,...), insbesondere zu allen realen Urbildern (2) durch Veränderung der realen Urbilder (2) zusätzliche virtuelle Urbilder (2a) zu generieren, die von einem realen Urbild (2) abweichen, und jedem virtuellen Urbild (2a) eine virtuelle nicht existierende Person (VP1, VP2,...) zuzuordnen und für den Test dem Erkennungssystem (1) die virtuellen Urbilder (2a), insbesondere auch die realen Urbilder (2) oder daraus berechnete Bilder (2b) zur Überprüfung zuzuführen und zu überprüfen, ob das Erkennungssystem (1) die zugeordnete Person zutreffend auffindet.
